# EUROPÄISCHE PATENTSCHRIFT

(11) **EP 0 619 133 B1**
(45) Veröffentlichungstag und Bekanntmachung des Hinweises auf die Patenterteilung: **13.11.1996**
(21) Anmeldenummer: 94103384.7
(22) Anmeldetag: 07.03.1994
(51) Int. Cl.: B01F 5/04, B01F 5/06

(54) **Mischkammer**
Mixing receptacle
Chambre de mélanges

(30) Priorität: 08.04.1993 CH 1086/93
(43) Veröffentlichungstag der Anmeldung: 12.10.1994
(73) Patentinhaber: ABB Management AG, CH-5401 Baden (CH)
(72) Erfinder: Althaus, Rolf,Dr., CH-9230 Flawil (CH); Beeck, Alexander, Dr., CH-5304 Endingen (CH); Chyou, Yau-Pin, Dr., Hsin-Yi District, Taipei 110 (TW); Eroglu, Adnan, Dr., CH-5217 Untersiggenthal (CH)

(56) Entgegenhaltungen:
- WO-A-92/11642
- AT-A- 360 737
- CH-A- 581 493
- DE-A- 2 934 087
- FR-A- 2 404 458
- GB-A- 2 087 249
- US-A- 4 899 772

## Beschreibung

### Technisches Gebiet

Die Erfindung betrifft eine Mischkammer, in welcher eine gasförmige Sekundärströmung in eine gasförmige, kanalisierte Hauptströmung eingedüst wird, wobei die Sekundärströmung einen wesentlich kleineren Massenstrom aufweist als die Hauptströmung.

### Stand der Technik

In Brennkammern können sich kalte Strähnen in der Hauptströmung befinden, die beispielsweise durch das Einleiten von Kühlluft in die Verbrennungsluft entstehen. Solche Strähnen können zu ungenügendem Ausbrand in der Verbrennungszone führen. Es sind deshalb Massnahmen zu treffen, Verbrennungsluft und Kühlluft innig zu vermischen.

Die Mischung einer Sekundärströmung mit einer in einem Kanal vorliegenden Hauptströmung geschieht in der Regel durch radiale Eindüsung der Sekundärströmung in den Kanal. Der Impuls der Sekundärströmung ist indes so gering, dass eine nahezu vollständige Durchmischung erst nach einer Strecke von ca. 100 Kanalhöhen erfolgt ist.

### Darstellung der Erfindung

Die Erfindung liegt deshalb die Aufgabe zugrunde, eine Mischkammer der eingangs genannten Art mit einer Vorrichtung auszustatten, mit der im durchströmten Kanal Längswirbel ohne Rezirkulationsgebiet erzeugt werden können.

Erfindungsgemäss wird dies durch die Merkmale des Anspruchs 1 erreicht. Es wird nämlich vorgeschlagen dass die Hauptströmung über Wirbel-Generatoren geführt wird, von denen über der Breite oder dem Umfang des durchströmten Kanals mehrere nebeneinander angeordnet sind, vorzugsweise ohne Zwischenräume, und deren Höhe mindestens 50% der Höhe des durchströmten Kanals oder der Höhe des dem Wirbel-Generators zugeordneten Kanalteils beträgt, und dass die Sekundärströmung im unmittelbaren Bereich der Wirbel-Generatoren in den Kanal eingeleitet wird.

Mit dem neuen statischen Mischer, den die 3-dimensionalen Wirbel-Generatoren darstellen, ist es möglich, in der Mischkammer ausserordentlich kurze Mischstrecken bei gleichzeitig geringem Druckverlust zu erzielen. Bereits nach einer vollen Wirbelumdrehung ist eine grobe Durchmischung der beiden Ströme vollzogen, während eine Feinmischung infolge von turbulenter Strömung nach einer Strecke vorliegt, die einigen wenigen Kanalhöhen entspricht.

Ein Wirbel-Generator zeichnet sich dadurch aus,
- dass er drei frei umströmte Flächen aufweist, die sich in Strömungsrichtung erstrecken und von denen eine die Dachfläche und die beiden andern die Seitenflächen bilden,
- dass die Seitenflächen mit einer gleichen Kanalwand bündig sind und miteinander den Pfeilwinkel α einschliessen,
- dass die Dachfläche mit einer quer zum durchströmten Kanal verlaufenden Kante an der gleichen Kanalwand anliegt wie die Seitenwände,
- und dass die längsgerichteten Kanten der Dachfläche, die bündig sind mit den in den Strömungskanal hineinragenden längsgerichteten Kanten der Seitenflächen unter einem Anstellwinkel α zur Kanalwand verlaufen

Der Vorteil eines solchen Elementes ist in seiner besonderen Einfachheit in jeder Hinsicht zu sehen. Fertigungstechnisch ist das aus drei umströmten Wänden bestehende Element völlig problemlos. Die Dachfläche kann mit den beiden Seitenflächen auf verschiedenste Arten zusammengefügt werden. Auch die Fixierung des Elementes an ebenen oder gekrümmten Kanalwänden kann im Falle von schweissbaren Materialien durch einfache Schweissnähte erfolgen. Vom strömungstechnischen Standpunkt her weist das Element beim Umströmen einen sehr geringen Druckverlust auf und es erzeugt Wirbel ohne Totwassergebiet. Schliesslich kann das Element durch seinen in der Regel hohlen Innenraum auf die verschiedensten Arten und mit diversen Mitteln gekühlt werden.

Es ist angebracht, das Verhältnis Höhe h der Verbindungskante der beiden Seitenflächen zur Kanalhöhe H so zu wählen, dass der erzeugte Wirbel unmittelbar stromabwärts des Wirbel-Generators die volle Kanalhöhe oder die volle Höhe des dem Wirbel-Generators zugeordneten Kanalteils ausfüllt. Die erzeugten gross-skaligen Wirbel sorgen dafür, dass in jeder Ebene hinter dem Wirbel-Generator eine ähnliche Verteilung vorliegt.

Dadurch, dass über der Breite des durchströmten Kanals mehrere Wirbel-Generatoren ohne Zwischenräume nebeneinander angeordnet sind, wird bereits kurz hinter den Wirbel-Generatoren der ganze Kanalquerschnitt von den Wirbeln voll beaufschlagt.

Es ist sinnvoll, wenn die beiden den Pfeilwinkel α einschliessenden Seitenflächen symmetrisch um eine Symmetrieachse angeordnet sind. Damit werden drallgleiche Wirbel erzeugt.

Wenn die beiden den Pfeilwinkel α einschliessenden Seitenflächen eine zumindest annähernd scharfe Verbindungskante miteinander bilden, die mit den Längskanten der Dachfläche zusammen eine Spitze bildet, wird der Durchströmquerschnitt kaum durch Sperrung beeinträchtigt.

Ist die Verbindungskante die austrittsseitige Kante des Wirbel-Generators und verläuft sie senkrecht zu jener Kanalwand, mit welcher die Seitenflächen bündig sind, so ist die Nichtbildung eines Nachlaufgebietes von Vorteil. Eine senkrechte Verbindungskante führt überdies zu ebenfalls senkrecht auf der Kanalwand stehenden Seitenflächen, was dem Wirbel-Generator die einfachst mögliche und fertigungstechnisch günstigste Form verleiht.

Wenn die Symmetrieachse parallel zur Kanalachse verläuft, und die Verbindungskante der beiden Seitenflächen die stromabwärtige Kante des Wirbel-Generators bildet, während demzufolge die quer zum durchströmten Kanal verlaufende Kante der Dachfläche die von der Kanalströmung zuerst beaufschlagte Kante ist, so werden an einem Wirbel-Generator zwei gleiche gegenläufige Wirbel erzeugt. Es liegt ein drallneutrales Strömungsbild vor, bei welchem der Drehsinn der beiden Wirbel im Bereich der Verbindungskante aufsteigend ist.

Es ist für gewisse Anwendungen zweckmässig, wenn der Anstellwinkel Θ der Dachfläche und/oder der Pfeilwinkel α der Seitenflächen so gewählt sind, dass noch im Bereich des Wirbel-Generators der von der Strömung erzeugte Wirbel aufplatzt. Mit der möglichen Variation der beiden Winkel hat man ein einfaches aerodynamisches Stabilisierungsmittel in der Hand, unabhängig von der Querschnittsform des durchströmten Kanals, welcher sowohl breit und niedrig als auch schmal und hoch sein kann, und mit ebenen oder gekrümmten Kanalwänden versehen sein kann.

Weitere Vorteile der Erfindung, insbesondere im Zusammenhang mit der Anordnung der Wirbel-Generatoren und der Einführung der Sekundärströmung ergeben sich aus den Unteransprüchen.

### Kurze Beschreibung der Zeichnung

In der Zeichnung sind mehrere Ausführungsbeispiele der Erfindung schematisch dargestellt.
Es zeigen:
- Fig. 1: eine perspektivische Darstellung eines Wirbel-Generators;
- Fig. 2: eine Anordnungsvariante des Wirbel-Generators;
- Fig. 3a-c: die gruppenweise Anordnung von Wirbel-Generatoren in einem Kanal im Längsschnitt, in einer Draufsicht und in einer Hinteransicht;
- Fig. 4a-c: eine Ausführungsvariante einer gruppenweisen Anordnung von Wirbel-Generatoren in gleicher Darstellung wie Fig. 3 mit einer Variante der Sekundarströmungs-führung;
- Fig. 6: eine dritte Variante der Sekundarströmungs-führung;

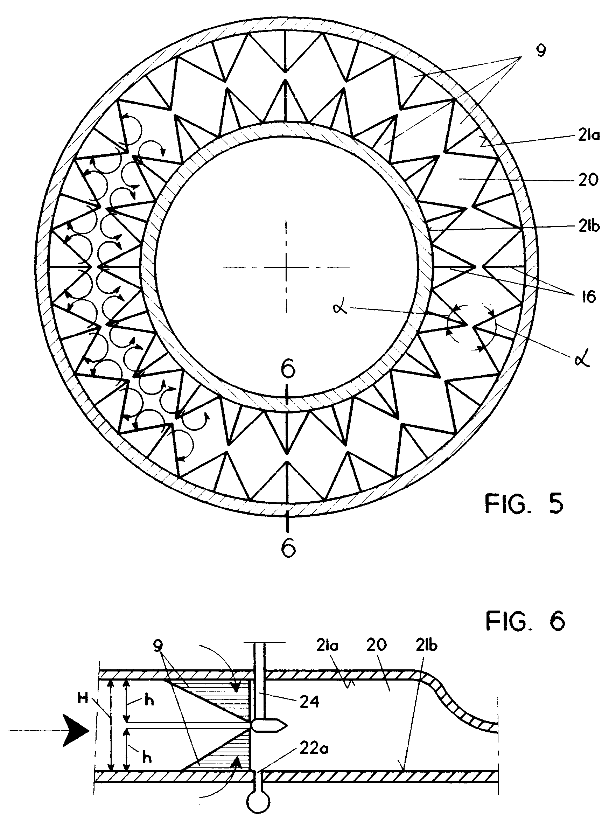

- Fig. 5: die Ringbrennkammer einer Gasturbine mit eingebauten Wirbel-Generatoren;
- Fig. 6: einen teilweisen Längsschnitt durch eine Brennkammer nach Linie 6-6 in Fig. 5

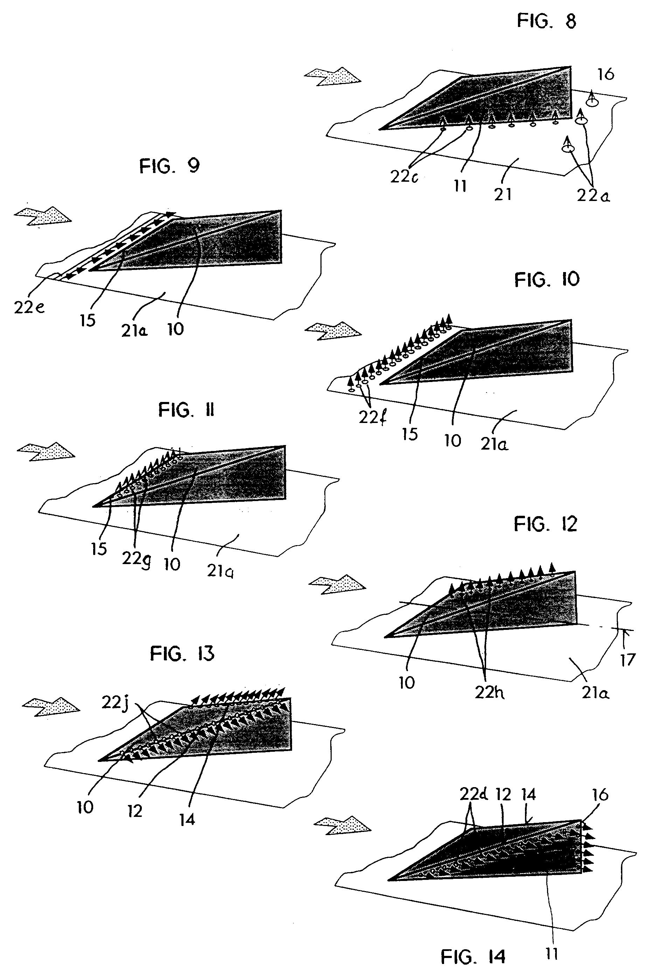

- Fig. 7: eine zweite Anordnungsvariante für die Wirbel-Generatoren;
- Fig. 8-13: eine dritte bis neunte Variante der Sekundarströmungs-führung;

Die Strömungsrichtung der Arbeitsmittel ist mit Pfeilen bezeichnet. In den verschiedenen Figuren sind die gleichen Elemente jeweils mit den gleichen Bezugszeichen versehen. Erfindungsunwesentliche Elemente wie Gehäuse, Befestigungen, Leitungsdurchführungen und dergleichen sind fortgelassen.

### Weg zur Ausführung der Erfindung

Bevor auf die eigentliche Mischkammer eingegangen wird, wird zunächst der für die Wirkungsweise der Erfindung wesentliche Wirbel-Generator beschrieben.

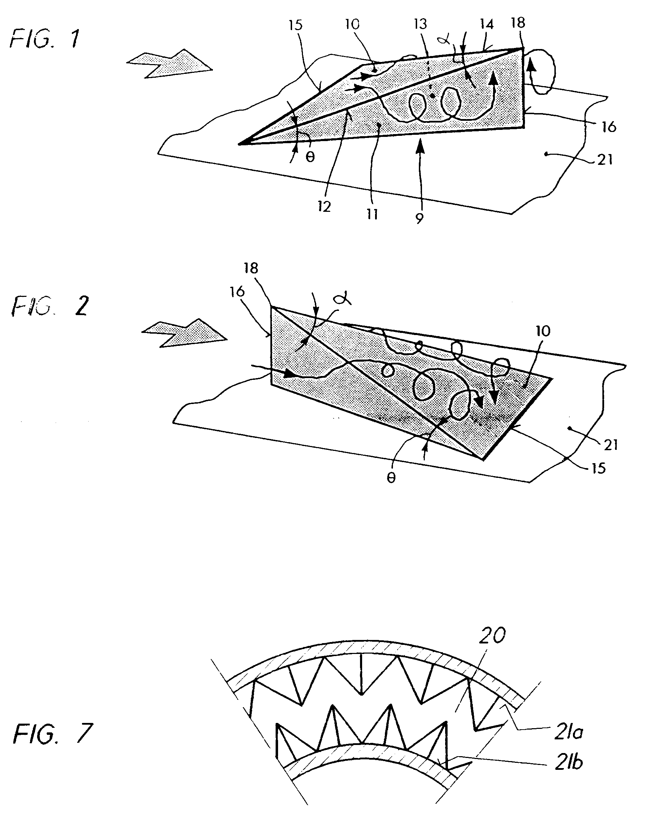

In den Figuren 1, 5 und 6 ist der eigentliche Kanal, der von einer mit grossem Pfeil symbolisierten Hauptströmung durchströmt wird, nicht dargestellt. Gemäss diesen Figuren besteht ein Wirbel-Generator im wesentlichen aus drei frei umströmten dreieckigen Flächen. Es sind dies eine Dachfläche 10 und zwei Seitenflächen 11 und 13. In ihrer Längserstreckung verlaufen diese Flächen unter bestimmten Winkeln in Strömungsrichtung.

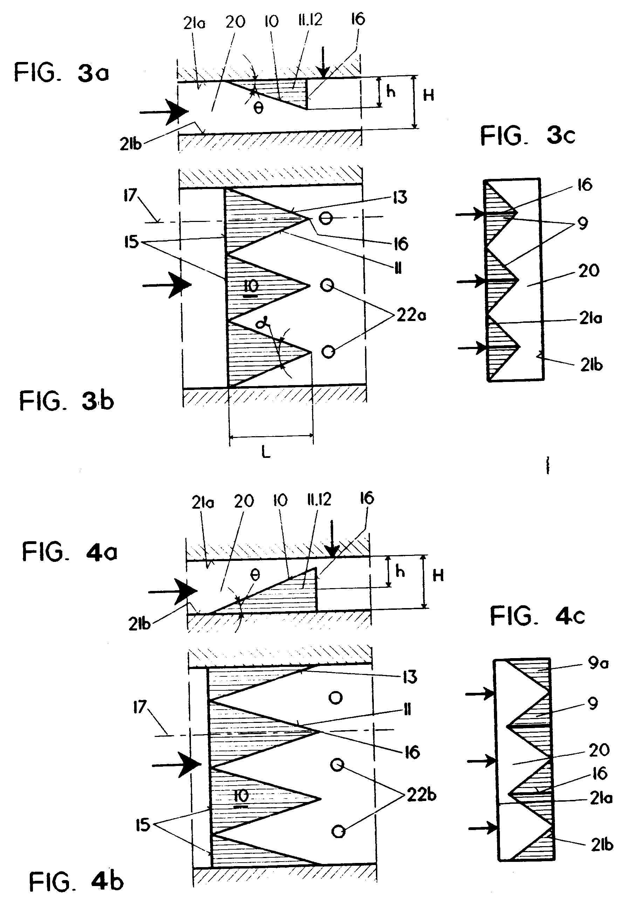

In sämtlichen gezeigten Beispielen stehen die beiden Seitenflächen 11 und 13 senkrecht auf der Kanalwand 21, wobei angemerkt wird, dass dies nicht zwingend ist. Die Seitenwände, welche aus rechtwinkligen Dreiecken bestehen, sind mit ihren Längsseiten auf dieser Kanalwand 21 fixiert, vorzugsweise gasdicht. Sie sind so orientiert, dass sie an ihren Schmalseiten einen Stoss bilden unter Einschluss eines Pfeilwinkels α. Der Stoss ist als scharfe Verbindungskante 16 ausgeführt und steht ebenfalls senkrecht zu jener Kanalwand 21, mit welcher die Seitenflächen bündig sind. Die beiden den Pfeilwinkel α einschliessenden Seitenflächen 11, 13 sind symmetrisch in Form, Grösse und Orientierung und sind beidseitig einer Symmetrieachse 17 angeordnet (Fig 3b, 4b). Diese Symmetrieachse 17 ist gleichgerichtet wie die Kanalachse.

Die Dachfläche 10 liegt mit einer quer zum durchströmten Kanal verlaufenden und sehr spitz ausgebildeten Kante 15 an der gleichen Kanalwand 21 an wie die Seitenwände 11, 13. Ihre längsgerichteten Kanten 12, 14 sind bündig mit den in den Strömungskanal hineinragenden längsgerichteten Kanten der Seitenflächen. Die Dachfläche verläuft unter einem Anstellwinkel Θ zur Kanalwand 21. Ihre Längskanten 12, 14 bilden zusammen mit der Verbindungskante 16 eine Spitze 18.

Selbstverständlich kann der Wirbel-Generator auch mit einer Bodenfläche versehen sein, mit welcher er auf geeignete Art an der Kanalwand 21 befestigt ist. Eine derartige Bodenfläche steht indes in keinem Zusammenhang mit der Wirkungsweise des Elementes.

In Fig. 1 bildet die Verbindungskante 16 der beiden Seitenflächen 11, 13 die stromabwärtige Kante des Wirbel-Generators. Die quer zum durchströmten Kanal verlaufende Kante 15 der Dachfläche 10 ist somit die von der Kanalströmung zuerst beaufschlagte Kante.

Die Wirkungsweise des Wirbel-Generators ist folgende: Beim Umströmen der Kanten 12 und 14 wird die Hauptströmung in ein Paar gegenläufiger Wirbel umgewandelt. Deren Wirbelachsen liegen in der Achse der Hauptströmung. Die Drallzahl und der Ort des Wirbelaufplatzens (vortex breakdown), sofern letzteres überhaupt gewünscht wird, werden bestimmt durch entsprechende Wahl des Anstellwinkels Θ und des Pfeilwinkels α. Mit steigenden Winkeln wird die Wirbelstärke bzw. die Drallzahl erhöht und der Ort des Wirbelaufplatzens wandert stromaufwärts bis hin in den Bereich des Wirbel-Generators selbst. Je nach Anwendung sind diese beiden Winkel Θ und α durch konstruktive Gegebenheiten und durch den Prozess selbst vorgegeben. Angepasst werden muss dann nur noch die Höhe h der Verbindungskante 16 (Fig. 3a).

In den Fig 3a und 4a, in welchen der durchströmte Kanal mit 20 bezeichnet ist, ist erkennbar, dass der Wirbel-Generator unterschiedliche Höhen gegenüber der Kanalhöhe H aufweisen kann. In der Regel wird man die Höhe h der Verbindungskante 16 so mit der Kanalhöhe H abstimmen, dass der erzeugte Wirbel unmittelbar stromabwärts des Wirbel-Generators bereits eine solche Grösse erreicht, dass die volle Kanalhöhe H ausgefüllt wird, was zu einer gleichmässigen Geschwindigkeitsverteilung in dem beaufschlagten Querschnitt führt. Ein weiteres Kriterium, welches Einfluss auf das zu wählende Verhältnis h/H nehmen kann, ist der Druckabfall, der beim Umströmen des Wirbel-Generators auftritt. Es versteht sich, dass mit grösserem Verhältnis h/H auch der Druckverlustbeiwert ansteigt.

Im Gegensatz zu Fig. 1 ist in Fig. 2 die scharfe Verbindungskante 16 jene Stelle, die von der Kanalströmung zuerst beaufschlagt wird. Das Element ist um 180° gedreht. Wie aus der Darstellung erkennbar, haben die beiden gegenläufigen Wirbel ihren Drehsinn geändert.

In Fig. 3 ist gezeigt, wie über der Breite des durchströmten Kanals 20 mehrere, hier 3 Wirbel-Generatoren ohne Zwischenräume nebeneinanderangeordnet sind. Der Kanal 20 hat in diesem Fall Rechteckform, was jedoch erfindungsunwesentlich ist.

Eine Ausführungsvariante mit 2 vollen und beidseitig daran angrenzenden 2 halben Wirbel-Generatoren ist in Fig. 4 gezeigt. Bei gleicher Kanalhöhe H und gleichem Anstellwinkel Θ der Dachfläche 10 wie in Fig. 3 unterscheiden sich die Elemente insbesondere durch ihre grössere Höhe h. Bei gleichbleibendem Anstellwinkel führt dies zwangsläufig zu einer grösseren Länge L des Elementes und demzufolge auch - wegen der gleichen Teilung - zu einem kleineren Pfeilwinkel α. Im Vergleich mit Fig. 3 werden die erzeugten Wirbel eine geringere Drallstärke aufweisen, jedoch innert kürzerem Intervall den Kanalquerschnitt voll ausfüllen. Falls in beiden Fällen ein Wirbelaufplatzen beabsichtigt ist, beispielsweise zum Stabilisieren der Strömung, wird dies beim Wirbel-Generator nach Fig. 4 später erfolgen als bei jenem nach Fig. 3.

Die in den Fig. 3 und 4 dargestellten Kanäle stellen rechteckige Mischkammern dar. Es wird noch einmal darauf hingewiesen, dass die Form des durchströmten Kanals für die Wirkungsweise der Erfindung nicht wesentlich ist. Statt des gezeigten Rechtecks könnte es sich beim Kanal auch um ein Ringsegment handeln, d.h. die Wände 21a und 21b wären gekrümmt. Die obige Aussage, dass die Seitenflächen senkrecht auf der Kanalwand stehen, muss in einem solchen Fall selbstverständlich relativiert werden. Massgebend ist, dass die auf der Symmetrielinie 17 liegende Verbindungskante 16 senkrecht auf der entsprechenden Wand steht. Im Fall von ringförmigen Wänden würde die Verbindungskante 16 somit radial ausgerichtet sein, wie dies in Fig. 5 dargestellt ist.

Die Figuren 5 und 6 zeigen vereinfacht eine Mischkammer mit ringförmig durchströmtem Kanal 20. Bei dieser Ringkammer könnte es sich beispielsweise um die Ringbrennkammer einer Gasturbine handeln. An beiden Kanalwänden 21a und 21b ist jeweils eine gleiche Anzahl von Wirbel-Generatoren im Umfangsrichtung so aneinandergereiht, dass die Verbindungskanten 16 von zwei gegenüberliegenden Wirbel-Generatoren in der gleichen Radialen liegen. Werden gleiche Höhen h für gegenüberliegende Wirbel-Generatoren vorausgesetzt, so zeigt Fig. 5, dass die Wirbel-Generatoren am inneren Kanalring 21b eine kleinere Pfeilung α haben. Im Längsschnitt in Fig. 6 ist erkennbar, dass dies durch einen grösseren Anstellwinkel Θ kompensiert werden könnte, wenn drallgleiche Wirbel im inneren und äusserern Ringquerschnitt erwünscht sind. Bei dieser Lösung werden, wie in Fig. 5 angedeutet, zwei Wirbelpaare mit jeweils kleineren Wirbeln erzeugt, was zu einer kürzeren Mischlänge führt. Die Sekundärströmung, z.B. Kühlluft, könnte bei dieser Ausführung nach den Methoden der später zu beschreibenden Fig. 8 bis 14 in die Hauptströmung eingeführt werden.

In den bereits beschriebenen Fig. 3 und 4 werden mit Hilfe der Wirbel-Generatoren 9 zwei Strömungen miteinander gemischt. Die Hauptströmung in Form von Brennluft - oder Brenngas, je nach Brennkammertyp - attackiert in Pfeilrichtung die quergerichteten Eintrittskanten 15. Die Sekundärströmung in Form von Kühlluft weist einen wesentlich kleineren Massenstrom auf als die Hauptströmung. Sie wird im unmittelbaren Bereich der Wirbel-Generatoren senkrecht in die Hauptströmung eingeleitet.

Gemäss Fig. 3 geschieht diese Eindüsung über Einzelbohrungen 22a, die in der Wand 21a angebracht sind. Bei der Wand 21a handelt es sich um jene Wandung, an der die Wirbel-Generatoren angeordnet sind. Die Bohrungen 22a befinden sich auf der Symmetrielinie 17 stromabwärts hinter der Verbindungskante 16 jedes Wirbel-Generators. Bei dieser Konfiguration wird die Kühlluft in die bereits bestehenden gross-skaligen Wirbel eingegeben.

Die Fig. 4 zeigt eine Ausführungsvariante einer Mischkammer, bei der die Sekundärströmung ebenfalls über Wandbohrungen 22b eingedüst wird. Diese befinden sich stromabwärts der Wirbel-Generatoren in jener Wand 21b, an der die Wirbel-Generatoren nicht angeordnet sind, also an der der Wand 21a gegenüberliegenden Wand. Die Wandbohrungen 22b sind jeweils mittig zwischen den Verbindungskanten 16 zweier benachbarter Wirbel-Generatoren angebracht, wie aus Fig. 4 ersichtlich. Auf diese Weise gelangt die Kühlluft auf die gleiche Art in die Wirbel wie bei der Ausführung nach Fig. 3. Allerdings mit dem Unterschied, dass er nicht mehr in die Wirbel eines von einem gleichen Wirbel-Generator erzeugten Wirbelpaares eingemischt wird, sondern in je einen Wirbel zweier benachbarter Wirbel-Generatoren. Da die benachbarten Wirbel-Generatoren indes ohne Zwischenraum angeordnet sind und Wirbelpaare mit gleichen Drehsinn erzeugen, sind die Eindüsungen nach den Fig. 3 und 4 wirkungsgleich.

Die Teilansicht in Fig. 7 zeigt wie Fig. 5 einen ringförmigen Kanal 20, bei dem sowohl an der äussseren Ringwand 21a als auch an der inneren Ringwand 21b eine gleiche Anzahl von Wirbel-Generatoren 9 im Umfangsrichtung aneinandergereiht sind. In Abweichung zu Fig. 5 sind hier jedoch die Verbindungskanten 16 von je zwei gegenüberliegenden Wirbel-Generatoren um eine halbe Teilung gegeneinander versetzt sind. Diese Anordnung bietet die Möglichkeit, die Höhe h des einzelnen Elementes zu vergrössern. Stromabwärts der Wirbel-Generatoren werden die erzeugten Wirbel miteinander kombiniert, was zum einen die Mischqualität noch verbessert und zum andern zu einer grösseren Lebensdauer des Wirbels führt.

Die Figuren 8 bis 14 zeigen weitere mögliche Formen der Einführung der Sekundärströmung in die Hauptströmung, wobei es sich beispielsweise um mit heisser Verbrennungsluft oder Brenngasen zu vermischende kalte Kühlluft handelt.

Gemäss Fig. 8 wird die Kühlluft - zusätzlich zu den bereits beschriebenen Bohrungen 22a stromabwärts der Wirbel-Generatoren - über Wandbohrungen 22c eingedüst, die sich unmittelbar neben den Seitenwänden 11, 13 und in deren Längserstreckung in der gleichen Wand 21a befinden, an der die Wirbel-Generatoren angeordnet sind. Das Einleiten der Sekundärströmung durch die Wandbohrungen 22c verleiht den erzeugten Wirbeln einen zusätzlichen Impuls, was seine Lebensdauer verlängert.

Gemäss Fig. 9 und 10 wird die Kühlluft über einerseits über einen Schlitz 22e oder über Wandbohrungen 22f eingedüst wird, die sich unmittelbar vor der quer zum durchströmten Kanal verlaufenden Kante 15 der Dachfläche 10 und in deren Längserstreckung in der gleichen Ringwand 21a befinden, an der die Wirbel-Generatoren angeordnet sind. Die Geometrie der Wandbohrungen 22f oder des Schlitzes 22e ist so gewählt, dass die Kühlluft unter einem bestimmten Einspritzwinkel in die Hauptströmung eingedüst wird und den nachfolgenden Wirbel-Generator als Schutzfilm gegen die heisse Hauptströmung umströmt.

In den nachstehend beschriebenen Beispielen wird die Sekundärströmung über nicht gezeigte Mittel durch die Kanalwand 21a ins hohle Innere des Wirbel-Generators eingeleitet.

Gemäss Fig. 11 wird die Kühlluft über Wandbohrungen 22g eingedüst wird, die sich innerhalb der Dachfläche 10 unmittelbar hinter der quer zum durchströmten Kanal verlaufenden Kante 15 und in deren Längserstreckung befinden. Die Kühlung des Wirbel-Generators erfolgt hier mehr extern als intern. Die austretende Sekundärströmung bildet beim Umströmen der Dachfläche 10 eine diese gegen die heisse Hauptströmung abschirmende Schutzschicht.

Gemäss Fig. 12 wird die Kühlluft über Wandbohrungen 22h eingedüst, die innerhalb der Dachfläche 10 entlang der Symmetrielinie 17 gestaffelt angeordnet sind. Mit dieser Variante werden die Kanalwände besonders gut vor der heissen Hauptströmung geschützt, da die Kühlluft zunächst am Aussenumfung der Wirbel geführt wird.

Gemäss Fig. 13 wird die Kühlluft über Wandbohrungen 22j eingedüst, die sich in den längsgerichteten Kanten 12, 14 der Dachfläche 10 befinden. Diese Lösung gewährleistet eine gute Kühlung der Wirbel-Generatoren, da die Kühlluft an den Extremitäten austritt und somit die Innenwandungen des Elementes voll umspült. Die Sekundärströmung wird hier direkt in den entstehenden Wirbel hineingegeben, was zu definierten Strömungsverhältnissen führt.

In Fig. 14 geschieht die Eindüsung über Wandbohrungen 22d, die sich in den Seitenflächen 11 und 13 einerseits im Bereich der Längskanten 12 und 14 und andererseits im Bereich der Verbindungskante 16 befinden. Diese Variante ist wirkungsähnlich wie jene aus den Bohrungen 22a in Fig. 8 und aus den Bohrungen 22j in Fig. 11.

Handelt es sich bei der Mischkammer beispielsweise um eine Brennkammer, so wird nach Fig. 6 der Brennstoff, in der Regel Öl, über eine zentrale Brennstofflanze 24 eingedüst, deren Mündung sich stromabwärts der Wirbel-Generatoren 9 im Bereich deren Spitze 18 befinden. Die Eindüsung der Kühlluft geschieht bei diesem Beispiel zweifach. Zum einen, wie dies durch Pfeile angedeutet ist, über Wandbohrungen in den Wirbel-Generatoren selbst nach einer der Methoden gemäss Fig. 11 bis 14 und zum andern über Wandbohrungen 22a in der Kanalwand 21b, wobei diese Wandbohrungen über eine Ringleitung versorgt werden können.

Wird eine Wirbel-Generator-Konfiguration gemäss Fig. 6 mit zentraler Eindüsung des Brennstoffs über eine Lanze 24 zugrundegelegt, so werden die Wirbel-Generatoren 9 so ausgelegt, dass Rezirkulationszonen grösstenteils vermieden werden. Dadurch ist die Verweilzeit der Brennstoffpartikel in den heissen Zonen sehr kurz, was sich günstig auf mimimale Bildung von NOₓ auswirkt. Der eingedüste Brennstoff wird von den Wirbeln mitgeschleppt und mit der Hauptströmung vermischt. Er folgt dem schraubenförmigen Verlauf der Wirbel und wird stromabwärts der Wirbel in der Kammer gleichmässig feinverteilt.

In Abweichung zu den bisher gezeigten Wirbel-Generatoren könnten die beiden den Pfeilwinkel α einschliessenden Seitenflächen 11, 13 des Wirbel-Generators 9 auch eine unterschiedliche Länge L aufweisen. In diesem Fall würde die Dachfläche 10 mit einer schräg zum durchströmten Kanal 20 verlaufenden Kante 15 an der gleichen Kanalwand 21 anliegen wie die Seitenwände und über der Breite des Wirbel-Generators einen unterschiedlichen Anstellwinkel Θ aufweisen. Eine derartige Variante hat die Wirkung, dass Wirbel mit unterschiedlicher Stärke erzeugt werden. Beispielsweise kann damit auf einen der Hauptströmung anhaftenden Drall eingewirkt werden. Oder aber durch die unterschiedlichen Wirbel wird der ursprünglich drallfreien Hauptströmung stromabwärts der Wirbel-Generatoren ein Drall aufgezwungen. Eine derartige Konfiguration eignet sich gut als eigenständige, kompakte Brennereinheit. Bei der Verwendung von mehreren solcher Einheiten, beispielsweise in einer Gasturbinen-Ringbrennkammmer, kann der der Hauptströmung aufgezwungene Drall ausgenutzt werden, um das Querzündverhalten der Brennerkonfiguration, z.B. bei Teillast, zu verbesern.

### Bezugszeichenliste

- 9: Wirbel-Generator
- 10: Dachfläche
- 11: Seitenfläche
- 12: Längskante
- 13: Seitenfläche
- 14: Längskante
- 15: quer verlaufenden Kante von 10
- 16: Verbindungskante
- 17: Symmetrielinie
- 18: Spitze
- 20, a: Kanal
- 21, a,b: Kanalwand
- 22, a-j: Wandbohrung
- 24: Brennstofflanze
- Θ: Anstellwinkel
- α: Pfeilwinkel
- h: Höhe von 16
- H: Kanalhöhe
- L: Länge des Wirbel-Generators

## Patentansprüche

1. Mischkammer, in welcher eine gasförmige Sekundärströmung in eine gasförmige, kanalisierte Hauptströmung eingedüst wird, wobei die Sekundärströmung einen wesentlich kleineren Massenstrom aufweist als die Hauptströmung,
dadurch gekennzeichnet,
dass die Hauptströmung über Wirbel-Generatoren (9) geführt wird, von denen über der Breite oder dem Umfang des durchströmten Kanals (20) mehrere nebeneinander angeordnet sind, vorzugsweise ohne Zwischenräume, wobei jeder Wirbel-Generator (9) drei frei umströmte Flächen aufweist, die sich in Strömungsrichtung erstrecken und von denen eine die Dachfläche (10) und die beiden andern die Seitenflächen (11, 13) bilden,
die Seitenflächen (11, 13) mit einer gleichen Kanalwand (21) bündig sind und miteinander den Pfeilwinkel (α) einschliessen,
die Dachfläche (10) mit einer quer zum durchströmten Kanal (20) verlaufenden Kante (15) an der gleichen Kanalwand (21) anliegt wie die Seitenwände,
und die längsgerichteten Kanten (12, 14) der Dachfläche, die bündig sind mit den in den Strömungskanal hineinragenden längsgerichteten Kanten der Seitenflächen unter einem Anstellwinkel (Θ) zur Kanalwand (21) verlaufen und die Höhe (h) der Wirbel-Generatoren, definiert als der größte Abstand der Dachfläche (10) von der Kanalwand (21) mindestens 50% der Höhe (H) des durchströmten Kanals oder der vollen Höhe des dem Wirbel-Generators zugeordneten Kanalteils beträgt, und dass die Sekundärströmung im unmittelbaren Bereich der Wirbel-Generatoren (9) in den Kanal (20) eingeleitet wird.

2. Mischkammer nach Anspruch 1, dadurch gekennzeichnet, dass das Verhältnis Höhe (h) des Wirbel-Generators zur Kanalhöhe (H) so gewählt ist, dass der erzeugte Wirbel unmittelbar stromabwärts des Wirbel-Generators die volle Kanalhöhe ausfüllt.

3. Mischkammer nach Anspruch 1, dadurch gekennzeichnet, dass die beiden den Pfeilwinkel (α) einschliessenden Seitenflächen (11, 13) des Wirbel-Generators (9) symmetrisch um eine Symmetrieachse (17) angeordnet sind.

4. Mischkammer nach Anspruch 1, dadurch gekennzeichnet, dass die beiden den Pfeilwinkel α einschliessenden Seitenflächen (11, 13) des Wirbel-Generators (9) eine unterschiedliche Länge (L) aufweisen, so dass die Dachfläche (10) mit einer schräg zum durchströmten Kanal (20) verlaufenden Kante (15) an der gleichen Kanalwand (21) anliegt wie die Seitenwände und über der Breite des Wirbel-Generators einen unterschiedlichen Anstellwinkel (Θ) aufweist.

5. Mischkammer nach Anspruch 3, dadurch gekennzeichnet, dass die beiden den Pfeilwinkel (α) einschliessenden Seitenflächen (11, 13) eine Verbindungskante (16) miteinander umfassen, welche zusammen mit den längsgerichteten Kanten (12, 14) der Dachfläche (10) eine Spitze (18) bilden, und dass die Verbindungskante vorzugsweise senkrecht zu jener Kanalwand (21) verläuft, mit welcher die Seitenflächen bündig sind.

6. Mischkammer nach Anspruch 5, dadurch gekennzeichnet, dass die Verbindungskante (16) und/oder die längsgerichteten Kanten (12, 14) der Dachfläche zumindest annähernd scharf ausgebildet sind.

7. Mischkammer nach Anspruch 3 und 5, dadurch gekennzeichnet, dass die Symmetrieachse (17) des Wirbel-Generators (9) parallel zur Kanalachse verläuft, wobei die Verbindungskante (16) der beiden Seitenflächen (11, 13) die stromabwärtige Kante des Wirbel-Generators bildet und wobei die quer zum durchströmten Kanal (20) verlaufende Kante (15) der Dachfläche (10) die von der Hauptströmung zuerst beaufschlagte Kante ist.

8. Mischkammer nach Anspruch 1, dadurch gekennzeichnet, dass der Anstellwinkel (Θ) der Dachfläche (10) und/oder der Pfeilwinkel (α) der Seitenflächen (11, 13) so gewählt sind, dass noch im Bereich des Wirbel-Generators der von der Strömung erzeugte Wirbel aufplatzt.

9. Mischkammer nach Anspruch 1, dadurch gekennzeichnet, dass der Kanal (20) ringförmig ist, und dass sowohl an der äussseren Ringwand (21a) als auch an der inneren Ringwand (21b) eine gleiche Anzahl von Wirbel-Generatoren (9) im Umfangsrichtung aneinandergereiht sind, wobei die Verbindungskanten (16) von je zwei gegenüberliegenden Wirbel-Generatoren auf der gleichen Radialen liegen. (Fig. 6)

10. Mischkammer nach Anspruch 1, dadurch gekennzeichnet, dass der Kanal (20) ringförmig ist, und dass sowohl an der äussseren Ringwand (21a) als auch an der inneren Ringwand (21b) eine gleiche Anzahl von Wirbel-Generatoren (9) im Umfangsrichtung aneinandergereiht sind, wobei die Verbindungskanten (16) von je zwei gegenüberliegenden Wirbel-Generatoren um eine halbe Teilung gegeneinander versetzt sind. (Fig. 7)

11. Mischkammer nach Anspruch 1, dadurch gekennzeichnet, dass der Kanal ringförmig ist, dass die Kanalwand, an der eine Mehrzahl von Wirbel-Generatoren (9) in Umfangsrichtung aneinandergereiht sind, die innere und/oder äussere Ringwand (21a, 21b) ist, und dass die Sekundärströmung über Wandbohrungen (22a) eingedüst wird, von denen sich je eine in der Symmetrielinie (17) stromabwärts unmittelbar hinter der Verbindungskante (16) in der gleichen Ringwand (21a, 21b) befindet, an der die Wirbel-Generatoren angeordnet sind. (Fig. 3, 8)

12. Mischkammer nach Anspruch 1, dadurch gekennzeichnet, dass die Sekundärströmung über Wandbohrungen (22c) eingedüst wird, die sich unmittelbar neben den Seitenwänden (11, 13) und in deren Längserstreckung in der gleichen Ringwand (21a) befinden, an der die Wirbel-Generatoren angeordnet sind. (Fig. 8)

13. Mischkammer nach Anspruch 1, dadurch gekennzeichnet, dass die Sekundärströmung über einen Schlitz (22e) oder Wandbohrungen (22f) eingedüst wird, die sich unmittelbar vor der quer zum durchströmten Kanal verlaufenden Kante (15) der Dachfläche (10) und in deren Längserstreckung in der gleichen Ringwand (21a) befinden, an der die Wirbel-Generatoren angeordnet sind. (Fig. 9, 10)

14. Mischkammer nach Anspruch 1, dadurch gekennzeichnet, dass die Sekundärströmung über Wandbohrungen (22g) eingedüst wird, die sich innerhalb der Dachfläche (10) unmittelbar hinter der quer zum durchströmten Kanal verlaufenden Kante (15) und in deren Längserstreckung befinden. (Fig. 11)

15. Mischkammer nach Anspruch 3, dadurch gekennzeichnet, dass die Sekundärströmung über Wandbohrungen (22h) eingedüst wird, die sich innerhalb der Dachfläche (10) in der Symmetrielinie (17) befinden. (Fig. 12)

16. Mischkammer nach Anspruch 3, dadurch gekennzeichnet, dass die Sekundärströmung über Wandbohrungen (22j) eingedüst wird, die sich in den längsgerichteten Kanten (12, 14) der Dachfläche (10) befinden. (Fig. 13)

17. Mischkammer nach Anspruch 5, dadurch gekennzeichnet, dass die Sekundärströmung über Wandbohrungen (22d) eingedüst wird, die sich in den Seitenwänden (11, 13) des Wirbel-Generators (9) im Bereich der längsgerichteten Kanten (12, 14) der Dachfläche und/oder der Verbindungskante (16) befinden. (Fig. 14)

18. Verwendung einer Mischkammer nach Anspruch 2 als selbstzündende Nachbrennkammer, wobei der Brennstoff über Brennstofflanzen (24) eingedüst wird, deren Mündungen sich stromabwärts des Wirbel-Generators (9) im Bereich dessen Spitze (18) befinden. (Fig. 6).

## Claims

1. Mixing chamber in which a gaseous secondary flow is introduced into a gaseous, ducted main flow, the secondary flow having a substantially smaller mass flow than the main flow, characterized in that the main flow is guided via vortex generators (9), of which a plurality are arranged adjacent to one another and preferably without intermediate spaces over the width or the periphery of the duct (20) through which flow takes place,
each vortex generator (9) having three surfaces around which flow takes place freely, which surfaces extend in the flow direction, one of them forming the top surface (10) and the others forming the side surfaces (11, 13), the side surfaces (11, 13) abutting the same duct wall (21) and enclosing the V-angle (α) between them,
the top surface (10) being in contact, by means of an edge (15) extending transverse to the duct (20) through which flow takes place, with the same duct wall (21) as the side walls,
and the longitudinally directed edges (12, 14) of the top surface, which abut the longitudinally directed edges of the side surfaces protruding into the flow duct, extending at an angle of incidence (θ) to the duct wall (21), and
the height (h) of the vortex generators, defined as the greatest clearance of the top surface (10) from the duct wall (21), being at least 50% of the height (H) of the duct through which flow takes place or of the complete height of the duct part associated with the vortex generator, and in that the secondary flow is led into the duct (20) in the immediate region of the vortex generators (9).

2. Mixing chamber according to Claim 1, characterized in that the ratio between the height (h) of the vortex generator and the duct height (H) is selected in such a way that the vortex generated fills the complete duct height immediately downstream of the vortex generator.

3. Mixing chamber according to Claim 1, characterized in that the two vortex generator (9) side surfaces (11, 13) enclosing the V-angle (α) are arranged symmetrically about an axis of symmetry (17).

4. Mixing chamber according to Claim 1, characterized in that the two vortex generator (9) side surfaces (11, 13) enclosing the V-angle α have different lengths (L) so that the top surface (10) is in contact, by means of an edge (15) extending obliquely to the duct (20) through which flow takes place, with the same duct wall (21) as the side walls and has a different angle of incidence (θ) over the width of the vortex generator.

5. Mixing chamber according to Claim 3, characterized in that the two side surfaces (11, 13) enclosing the V-angle (α) include between them a connecting edge (16) which, together with the longitudinally directed edges (12, 14) of the top surface (10), form a point (18) and in that the connecting edge preferably extends at right angles to that duct wall (21) which the side surfaces abut.

6. Mixing chamber according to Claim 5, characterized in that the connecting edge (16) and/or the longitudinally directed edges (12, 14) of the top surface are configured so as to be at least approximately sharp.

7. Mixing chamber according to Claims 3 and 5, characterized in that the axis of symmetry (17) of the vortex generator (9) extends parallel to the axis of the duct, whereby the connecting edge (16) of the two side surfaces (11, 13) forms the downstream edge of the vortex generator and whereby the top surface (10) edge (15) extending transverse to the duct (20) through which flow takes place is the edge which the main flow meets first.

8. Mixing chamber according to Claim 1, characterized in that the angle of incidence (θ) of the top surface (10) and/or the V-angle (α) of the side surfaces (11, 13) are selected in such a way that the vortex generated by the flow has already broken down in the region of the vortex generator.

9. Mixing chamber according to Claim 1, characterized in that the duct (20) is annular and in that an equal number of vortex generators (9) are arranged in a row in the peripheral direction both on the outer annulus wall (21a) and on the inner annulus wall (21b), the connecting edges (16) of each two opposite vortex generators being located on the same radial. (Fig. 6)

10. Mixing chamber according to Claim 1, characterized in that the duct (20) is annular and in that an equal number of vortex generators (9) are arranged in a row in the peripheral direction both on the outer annulus wall (21a) and on the inner annulus wall (21b), the connecting edges (16) of each two opposite vortex generators being offset relative to one another by half a pitch. (Fig. 7)

11. Mixing chamber according to Claim 1, characterized in that the duct is annular, in that the duct wall, on which a plurality of vortex generators (9) are arranged in a row in the peripheral direction, is the inner and/or outer annulus wall (21a, 21b) and in that the secondary flow is introduced via wall holes (22a) of which one is located in each line of symmetry (17) downstream and immediately behind the connecting edge (16) in the same annulus wall (21a, 21b) on which the vortex generators are arranged. (Figs. 3, 8)

12. Mixing chamber according to Claim 1, characterized in that the secondary flow is introduced via wall holes (22c) which are located immediately adjacent to and in the longitudinal extent of the side walls (11, 13) in the same annulus wall (21a) on which the vortex generators are arranged. (Fig. 8)

13. Mixing chamber according to Claim 1, characterized in that the secondary flow is introduced via a slot (22e) or wall holes (22f), which are located immediately before and in the longitudinal extent of the edge (15), of the top surface (10), extending transverse to the duct through which flow takes place in the same annulus wall (21a) on which the vortex generators are arranged. (Fig. 9, 10)

14. Mixing chamber according to Claim 1, characterized in that the secondary flow is introduced via wall holes (22g) which are located within the top surface (10) immediately behind and in the longitudinal extent of the edge (15) extending transverse to the duct through which flow takes place. (Fig. 11)

15. Mixing chamber according to Claim 3, characterized in that the secondary flow is introduced via wall holes (22h) which are located within the top surface (10) in the line of symmetry (17). (Fig. 12)

16. Mixing chamber according to Claim 3, characterized in that the secondary flow is introduced via wall holes (22j) which are located in the longitudinally directed edges (12, 14) of the top surface (10). (Fig. 13)

17. Mixing chamber according to Claim 5, characterized in that the secondary flow is introduced via wall holes (22d) which are located in the side walls (11, 13) of the vortex generator (9) in the region of the longitudinally directed edges (12, 14) of the top surface and/or of the connecting edge (16). (Fig. 14)

18. Use of a mixing chamber according to Claim 2 as a self-igniting reheat chamber, the fuel being introduced via fuel lances (24) whose openings are located downstream of the vortex generator (9) in the region of its point (18). (Fig. 6)

## Revendications

1. Chambre de mélange, dans laquelle un courant gazeux secondaire est injecté dans un courant gazeux principal canalisé, le courant secondaire présentant un débit massique sensiblement plus petit que le courant principal, caractérisée en ce que le courant principal est conduit sur des générateurs de tourbillons (9), dont plusieurs sont disposés l'un à côté de l'autre sur la largeur ou le périmètre du canal d'écoulement (20), de préférence sans espaces intermédiaires, dans laquelle chaque générateur de tourbillons (9) présente trois faces librement balayées par le courant, qui s'étendent dans la direction du courant et dont l'une forme la face de toit (10) et les deux autres les faces latérales (11, 13), les faces latérales (11, 13) sont posées à plat sur une même paroi du canal (21) et forment entre elles une flèche d'angle (α), la face de toit (10) s'applique par une arête (15) orientée transversalement au canal d'écoulement (20) sur la même paroi du canal (21) que les faces latérales, et les arêtes longitudinales (12, 14) de la face de toit, qui sont posées à plat sur les arêtes longitudinales des faces latérales, en saillie dans le canal d'écoulement, sont orientées avec un angle d'incidence (θ) vers la paroi du canal (21), et la hauteur (h) des générateurs de tourbillons, définie comme étant la plus grande distance entre la face de toit (10) et la paroi du canal (21), vaut au moins 50% de la hauteur (H) du canal d'écoulement ou de la hauteur totale de la partie du canal associée aux générateurs de tourbillons, et en ce que le courant secondaire est introduit dans le canal (20) à proximité immédiate des générateurs de tourbillons (9).

2. Chambre de mélange suivant la revendication 1, caractérisée en ce que le rapport entre la hauteur (h) du générateur de tourbillons et la hauteur (H) du canal est choisi de telle façon que le tourbillon produit remplisse toute la hauteur du canal immédiatement en aval du générateur de tourbillons.

3. Chambre de mélange suivant la revendication 1, caractérisée en ce que les deux faces latérales (11, 13) du générateur de tourbillons (9), formant la flèche d'angle (α), sont disposées symétriquement par rapport à un axe de symétrie (17).

4. Chambre de mélange suivant la revendication 1, caractérisée en ce que les deux faces latérales (11, 13) du générateur de tourbillons (9), formant la flèche d'angle (α), présentent une longueur (L) différente, de telle façon que la face de toit (10) s'applique par une arête (15) orientée en oblique par rapport au canal d'écoulement (20) sur la même paroi du canal (21) que les faces latérales et présente un angle d'incidence (θ) différent sur la largeur du générateur de tourbillons.

5. Chambre de mélange suivant la revendication 3, caractérisée en ce que les deux faces latérales (11, 13) formant la flèche d'angle (α) comprennent une arête (16) de jonction l'une à l'autre, qui forme une pointe (18) avec les arêtes longitudinales (12, 14) de la face de toit (10), et en ce que l'arête de jonction est de préférence perpendiculaire à la paroi du canal (21), sur laquelle les faces latérales sont posées à plat.

6. Chambre de mélange suivant la revendication 5, caractérisée en ce que l'arête de jonction (16) et/ou les arêtes longitudinales (12, 14) de la face de toit sont au moins approximativement effilées.

7. Chambre de mélange suivant la revendication 3 et 5, caractérisée en ce que l'axe de symétrie (17) du générateur de tourbillons (9) est parallèle à l'axe du canal, l'arête de jonction (16) des deux faces latérales (11, 13) formant l'arête d'aval du générateur de tourbillons et l'arête (15) de la face de toit (10) orientée transversalement par rapport au canal d'écoulement (20) constituant l'arête atteinte en premier lieu par le courant principal.

8. Chambre de mélange suivant la revendication 1, caractérisée en ce que l'angle d'incidence (θ) de la face de toit (10) et/ou l'angle (α) de la flèche des faces latérales (11, 13) sont choisis de telle façon que le tourbillon produit par le courant se place encore dans la zone du générateur de tourbillons.

9. Chambre de mélange suivant la revendication 1, caractérisée en ce que le canal (20) est annulaire, et en ce qu'un même nombre de générateurs de tourbillons (9) sont alignés en direction périphérique aussi bien à la paroi annulaire extérieure (21a) qu'à la paroi annulaire intérieure (21b), les arêtes de jonction (16) de deux générateurs de tourbillons opposés l'un à l'autre se trouvant sur la même radiale (Fig. 6).

10. Chambre de mélange suivant la revendication 1, caractérisée en ce que le canal (20) est annulaire, et en ce qu'un même nombre de générateurs de tourbillons (9) sont alignés en direction périphérique aussi bien à la paroi annulaire extérieure (21a) qu'à la paroi annulaire intérieure (21b), les arêtes de jonction (16) de deux générateurs de tourbillons opposés l'un à l'autre étant décalées d'un demi-pas l'une par rapport à l'autre (Fig. 7).

11. Chambre de mélange suivant la revendication 1, caractérisée en ce que le canal est annulaire, en ce que la paroi du canal, sur laquelle une pluralité de générateurs de tourbillons (9) sont alignés en direction périphérique, est la paroi annulaire intérieure et/ou extérieure (21a, 21b), et en ce que le courant secondaire est injecté par des trous de paroi (22a), dont chacun se trouve sur la ligne de symétrie (17) en aval immédiatement derrière l'arête de jonction (16), dans cette même paroi annulaire (21a, 21b) sur laquelle les générateurs de tourbillons sont disposés (Fig. 3, 8).

12. Chambre de mélange suivant la revendication 1, caractérisée en ce que le courant secondaire est injecté par des trous de paroi (22c), qui sont disposés immédiatement à côté des faces latérales (11, 13) et dans la direction longitudinale de celles-ci, dans cette même paroi annulaire (21a) sur laquelle les générateurs de tourbillons sont disposés (Fig. 8).

13. Chambre de mélange suivant la revendication 1, caractérisée en ce que le courant secondaire est injecté par une fente (22e) ou des trous de paroi (22f), qui se trouvent immédiatement avant l'arête (15) de la face de toit (10) orientée transversalement par rapport au canal d'écoulement (20) et dans la direction longitudinale de celle-ci, dans cette même paroi annulaire (21a) sur laquelle les générateurs de tourbillons sont disposés (Fig. 9, 10).

14. Chambre de mélange suivant la revendication 1, caractérisée en ce que le courant secondaire est injecté par des trous de paroi (22g), qui se trouvent à l'intérieur de la face de toit (10) immédiatement derrière l'arête (15) orientée transversalement par rapport au canal d'écoulement et dans la direction longitudinale de celle-ci (Fig. 11).

15. Chambre de mélange suivant la revendication 3, caractérisée en ce que le courant secondaire est injecté par des trous de paroi (22h), qui se trouvent à l'intérieur de la face de toit (10) sur la ligne de symétrie (17) (Fig. 12).

16. Chambre de mélange suivant la revendication 3, caractérisée en ce que le courant secondaire est injecté par des trous de paroi (22j), qui se trouvent dans les arêtes longitudinales (12, 14) de la face de toit (10) (Fig. 13).

17. Chambre de mélange suivant la revendication 5, caractérisée en ce que le courant secondaire est injecté par des trous de paroi (22d), qui se trouvent dans les faces latérales (11, 13) du générateur de tourbillons (9) dans la zone des arêtes longitudinales (12, 14) de la face de toit (10) et/ou de l'arête de jonction (16) (Fig. 14).

18. Utilisation d'une chambre de mélange suivant la revendication 2 comme chambre de post-combustion à auto-allumage, dans laquelle le combustible est injecté par des lances à combustible (24), dont les embouchures se trouvent en aval du générateur de tourbillons (9) dans la zone de la pointe (18) de celui-ci (Fig. 6).
